# EUROPÄISCHE PATENTSCHRIFT

(11) **EP 0 384 118 B1**
(45) Veröffentlichungstag und Bekanntmachung des Hinweises auf die Patenterteilung: **04.08.1993**
(21) Anmeldenummer: 90100821.9
(22) Anmeldetag: 16.01.1990
(51) Int. Cl.: B65G 65/06

(54) **Einrichtung zum Räumen einer Halde**
Device for removing material from a stock pile
Dispositif de reprise d'une halde

(30) Priorität: 24.02.1989 DE 3905670
(43) Veröffentlichungstag der Anmeldung: 29.08.1990
(73) Patentinhaber: PWH Anlagen + Systeme GmbH, D-66386 St. Ingbert-Rohrbach (DE)
(72) Erfinder: Bode, Günter, D-6670 St. Ingbert-Rohrbach (DE); Deckarm, Kurt, D-6670 St. Ingbert-Rohrbach (DE)
(74) Vertreter: John, Ernst

(56) Entgegenhaltungen:
- DE-A- 2 314 849
- DE-A- 3 219 185
- GB-A- 1 383 280
- SU-A- 174 644

## Beschreibung

Die Erfindung betrifft eine Einrichtung zum Räumen einer Halde gemäß den gattungsbildenden Merkmalen des ersten Patentanspruches.

Durch die DE-A 30 21 308 ist eine Vorrichtung zum Räumen einer Halde mit einer in Längsrichtung der Halde verfahrbaren Brücke und einem von der Brücke getragenen zum Kratzeingriff mit der stirnseitigen Abbaufläche der Halde bestimmten Rechen bekannt. Der Rechen besitzt eine Form und Größe entsprechend der Abbaufläche der Halde. Der Rechen ist einerseits an zwei äußeren Punkten nahe seiner Basis und andererseits an wenigstens einem inneren im Bereich der vertikalen Mittelebene höher gelegenen Punkt mit der Brücke verbunden. Die zwischen dem Rechen und der Brücke vorgesehenen Verbindungen enthalten Antriebselemente, die dem Rechen in abgesenkter Lage eine böschungsabwärts gerichtete Kratzbewegung und in angehobener Lage eine böschungsaufwärts gerichtete Rückführbewegung erteilen.

Durch diese Maßnahme soll insbesondere feuchtes oder gefrorenes Material, welches schlecht fließend ist, von der Böschungsspitze zum Böschungsfuß bewegt werden, wo es dann mittels seitlich austragender Einrichtungen, wie Brückenkratzer oder dgl., ausgetragen wird.

Nachteilig an einer derartigen Konstruktion ist zu bemerken, daß der gesamte Rechen ständig in Bewegung gesetzt werden muß, um ein Herabrieseln des Materiales herbeizuführen. Da der Rechen in Abhängigkeit vom Haldenquerschnitt verhältnismäßig schwer ausfällt, sind hier dementsprechend ausgebildete Antriebselemente vonnöten. Infolge der ständigen Auf- und Abwärtsbewegung des Rechens findet hier eine inkonstante Fließbewegung des Materiales böschungsabwärts statt, da das Material nach Anheben und Aufwärtsbewegen des Rechens wieder zur Ruhe kommt und erst beim nächsten Eingriff der Kratzelemente weiter nach unten bewegt werden kann. Durch diese Maßnahme ist ein ebenfalls inkonstanter Materialtransport am Haldenfuß gegeben, so daß beim Austragen noch weitere Bunker oder dgl. als Zwischenspeicher vorgesehen werden müssen, um einen gleichmäßigen Materialaustrag zu gewährleisten.

Die gattungsgemäße SU-A 174 644 betrifft ein Haldenräumgerät, das mit einem stationären Rechen ausgerüstet ist, in dessen unterem Bereich mehrere nebeneinander angeordnete Kratzer vorgesehen sind, die das im oberen Bereich der Halde durch den Rechen gelöste Material böschungsabwärts bewegen. Der Antrieb ist hierbei alternierend ausgelegt. Nachteilig ist festzustellen, daß eine derartige Einrichtung nicht in der Lage ist, zur Brückenbildung neigendes Material kontinuierlich auszutragen, zumal die Brückenbildung auf der gesamten abzubauenden Stirnfläche stattfindet und der stationäre - zwar seitlich bewegbar Rechen - nicht in der Lage ist, ausreichend Material zu lösen, um auf diese Art und Weise eine hinreichende Materialzufuhr in den Bereich der Kratzer zu gewährleisten.

Der Erfindung liegt ausgehend vom gattungsbildenden Teil des ersten Anspruches die Aufgabe zugrunde, die hier beschriebene Einrichtung dahingehend weiterzubilden, daß insbesondere zum Kleben neigendes, schwerfließendes, schüttfähiges Material einerseits problemlos böschungsabwärts transportiert und daß andererseits ein konstanter Materialaustrag ohne nachgeschaltete Bunker oder dgl. realisiert werden kann.

Diese Aufgabe wird erfindungsgemäß dadurch gelöst, daß der die Kratzer beinhaltende und die Abbaufläche im wesentlichen überdeckende Rahmen während des Verfahrens der Brücke stationär an der stirnseitigen Abbaufläche der Halde ruht und daß jeder Kratzer aus mehreren, jeweils zwischen zwei umlaufenden Zugelementen angeordneten als Kratzeisen ausgebildeten umlaufenden Kratzelementen besteht.

Durch diese Ausbildung wird sichergestellt, daß selbst zum Kleben neigendes Material problemlos böschungsabwärts bewegt werden kann, und zwar in kontinuierlichem Massenfluß und auf der gesamten Haldenbreite. Infolge dieses kontinuierlichen Massenflusses, über die gesamte Breite der Halde gesehen, erfolgt eine gute Homogenisierung des Materiales sowie eine gute Schaufelfüllung des seitlich austragenden Organes (Brückenkratzer oder dgl.).

Jeder Kratzer ist vorzugsweise aus einer Vielzahl seitlich an umlaufenden Zugelementen, wie Seilen, Gummigurten, Ketten oder dgl. verlagerten Kratzeisen gebildet, die das Material böschungsabwärts transportieren. Die Kratzeisen können hierbei entweder geradlinig oder aber gewölbt ausgebildet werden. Die spezielle Art der Ausbildung sollte hierbei vom zu räumenden Material abhängig gemacht werden.

Bei Verwendung von Ketten sind diese, einem weiteren Gedanken der Erfindung gemäß, als Rundstahlketten ausgebildet, die im Bereich des Untertrums auf der der Halde zugewandten Seite in verschleißarmen Lagern geführt sind. Die Auswahl der Materialien (z.B. Stahl auf Stahl, Kunststoff auf Stahl, usw.) hängt hierbei vom jeweiligen zu räumenden Material ab.

Damit jeder Bereich der Haldenstirnfläche erreicht werden kann, wird weiterhin vorgeschlagen, die Kratzeisen benachbarter Kratzer so in ihrer Länge auszubilden, daß deren Endbereiche einander überdecken.

Wie bereits angesprochen, ist der gemeinsame Antrieb für die einzelnen Kratzer im unteren Bereich des Rechens vorgesehen. Der Antrieb wird vorzugsweise durch zwei Einzelantriebe gebildet, von denen jeweils einer am freien Ende einer durch Kupplungen unterteilten Antriebswelle angeordnet ist. Die Antriebswelle ist aus dem Grund unterteilt, damit Wartungsarbeiten bzw. Reparaturen im Bereich der einzelnen Kratzer, der Antriebsketten sowie weiterer peripherer Bauteile problemlos durchgeführt werden können. Um Schlupf in den einzelnen Kettensträngen zu vermeiden, sind die Wellen in Stehlagern mit Pendelrollenlagern verlagert und mit Zahnkupplungen untereinander verbunden. Somit bleibt der jeweilige Abstand, in vertikaler Richtung gesehen, zwischen den einander überdeckenden Kratzeisen ständig gewahrt und eine Berührung der Kratzeisen benachbarter Kratzer wird ausgeschlossen.

Die Erfindung ist anhand eines Ausführungsbeispieles in der Zeichnung dargestellt und wird wie folgt beschrieben. Es zeigen:
- Figur 1 -: Seitenansicht der erfindungsgemäßen Einrichtung zum Räumen einer Halde
- Figur 2 -: Draufsicht auf einen der Rechen samt Kratzereinrichtungen
- Figur 3 -: Prinzipskizze einer alternativen Rechenhälfte mit Überdeckung der Kratzeisen
- Figur 4 -: Teilansicht eines Überdeckungsbereiches gem. Figur 3

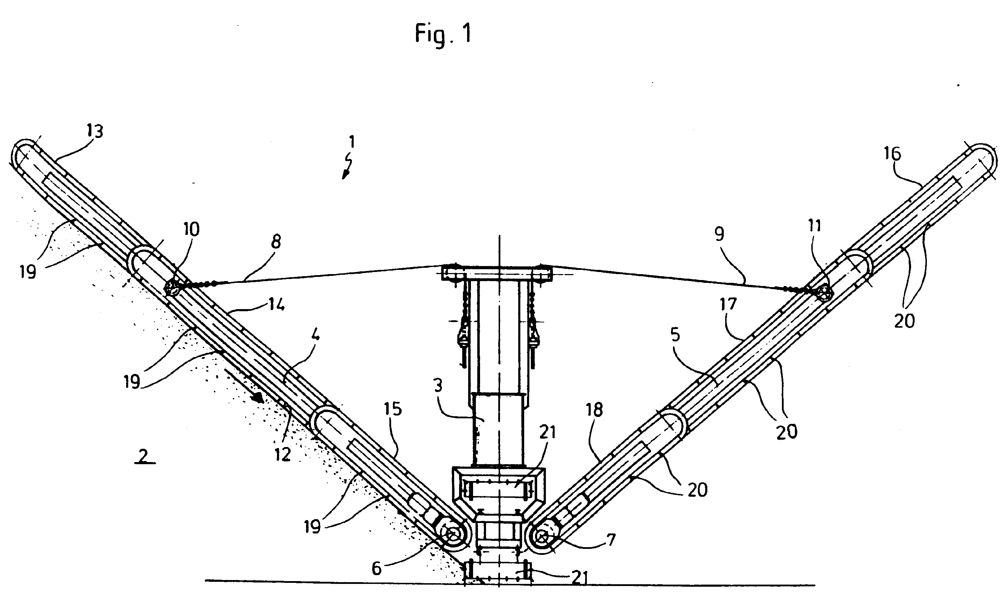

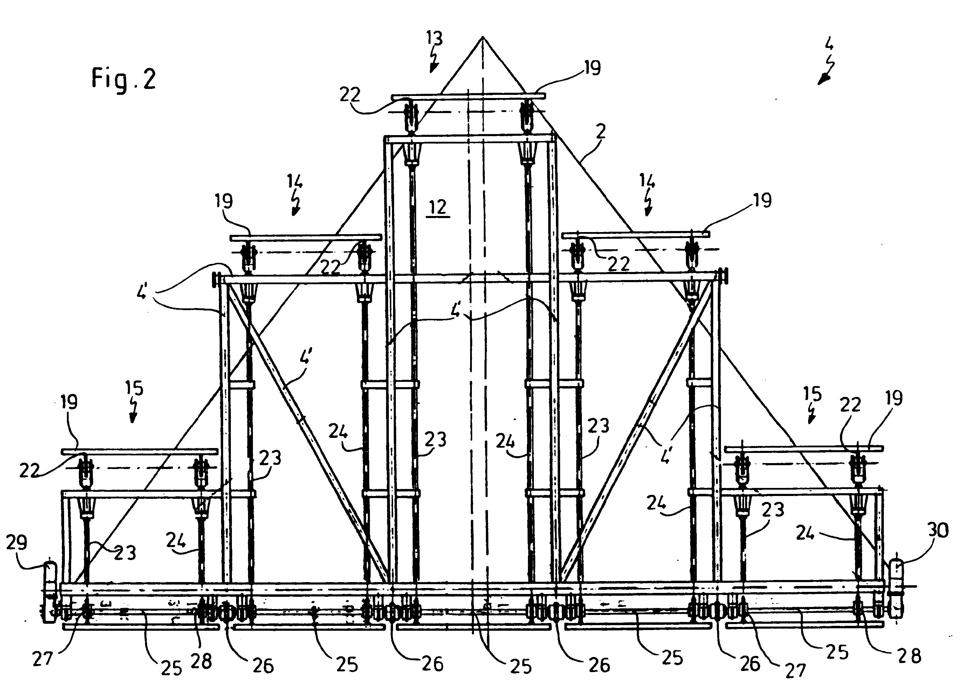

Figur 1 zeigt die erfindungsgemäße Einrichtung 1 zum Räumen einer Halde 2, die im wesentlichen aus folgenden Bauteilen besteht:
einer auf nicht weiter dargestellten Schienen verfahrbaren Brücke 3, die mit zwei Rechen 4,5 zusammenwirkt, wobei lediglich der jeweils unmittelbar im Eingriff mit der Halde 2 stehende Rechen 4 betätigbar ist. Die Rechen 4,5 sind jeweils um eine Horizontalachse 6,7 schwenkbar im unteren Bereich der Brücke 3 verlagert. Die Schwenkbewegung wird jeweils über im oberen Bereich der Brücke 3 umlenkbare Seile 8,9 sichergestellt, die mit dem Rechen 4,5 fest verbunden sind 10,11. Der jeweils mit der Halde 2 in Eingriff stehende Rechen 4 führt keine Relativbewegung quer zur Haldenstirnfläche 12 durch. Jeder Rechen 4,5 besteht aus mehreren nebeneinander angeordneten Kratzern 13,14,15,16,17,18, die aus einer Vielzahl umlaufender Kratzeisen 19,20 gebildet sind (siehe Figur 2).. Die Kratzeisen 19,20 bewegen das Material in Pfeilrichtung kontinuierlich böschungsabwärts, wo es von mit der Brücke 3 verbundenen umlaufenden Brückenkratzern 21 am Haldenfuß seitwärts ausgetragen wird.

Figur 2 zeigt eine Draufsicht auf den Rechen 4. Der Rechen 4 besteht aus einem Rahmen, der aus zusammengeschweißten Vierkantrohren 4' besteht. Im Bereich des Rahmens sind mehrere nebeneinander angeordnete Kratzer 13,14,15 vorgesehen, die in unterschiedlichen vertikalen Ebenen an der Stirnfläche 12 der Halde 2 zur Anlage kommen. Jeder Kratzer 13,14,15 ist mit einer Vielzahl im wesentlichen horizontal sich erstreckender Kratzeisen 19 versehen, die über Steckmitnehmer 22 mit jeweils einer umlaufenden verschleißfesten Rundstahlkette 23,24 fest verbunden sind. Im unteren Bereich des Rechens 4 bzw. des Rahmens 4' ist eine geteilte Antriebswelle 25 vorgesehen, die über Zahnkupplungen 26 zu einer gemeinschaftlichen Antriebswelle verbunden werden. Jeder Wellenteil 25 ist zusätzlich mit den unteren Umlenkrädern 27,28 der zugehörigen Rundgliederkette 23,24 versehen. Beiderseits der Wellen 25 ist jeweils ein Antrieb 29,30 vorgesehen. Durch diese Maßnahme wird eine gemeinsame Betätigung sämtlicher Kratzer 13-15 gewährleistet, wobei die einzelnen Kratzeisen 19 das Material in kontinuierlicher Weise böschungsabwärts bewegen können.

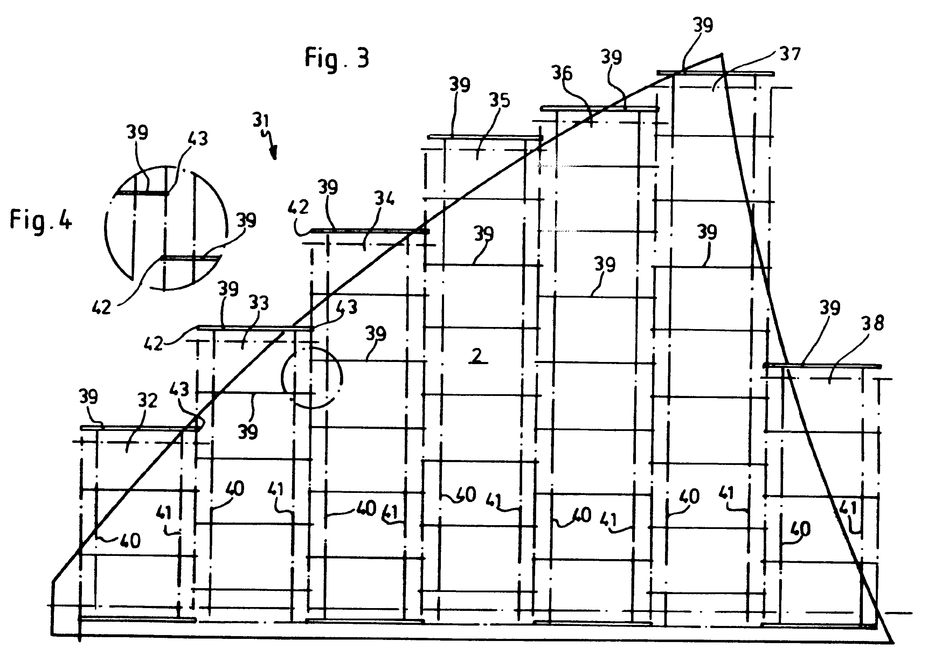

Figur 3 zeigt eine Prinzipskizze eines alternativen Rechens 31, der ebenfalls aus mehreren in verschiedenen vertikalen Höhen angeordneten Kratzern 32-38 gebildet ist. Die Kratzeisen 39 der nebeneinander angeordneten Kratzer 32-38 sind ebenfalls in seitlich angeordneten umlaufenden Rundgliederketten 40,41 gehalten. Die einander zugewandten Endbereiche 42,43 eines jeden Kratzeisens 39 überdecken einander in horizontaler Richtung, so daß sämtliche Bereiche der Halde 2 durch die Kratzeisen 39 bestrichen werden können.

Diese Maßgabe wird in Figur 4 noch einmal verdeutlicht, die eine Teilansicht des Überdeckungsbereiches darstellt.

## Patentansprüche

1. Einrichtung zum Räumen einer Halde (2), mit einer in Längsrichtung der Halde (2) verfahrbaren Brücke (3) sowie mehreren nebeneinander im Bereich eines mit der Brücke (3) verbundenen Rahmens angeordneten, mit Kratzelementen (19,20,39) bestückten, unterschiedliche Höhen aufweisenden Kratzern (13-18, 32-38), die um eine Horizontalachse (6,7) schwenkbar sind, wobei die Kratzer (13-18, 32-38) gemeinsam antreibbar sind, dadurch gekennzeichnet, daß der die Kratzer (13-18, 32-38) beinhaltende und die Abbaufläche (12) im wesentlichen überdeckende Rahmen (4') während des Verfahrens der Brücke (3) stationär an der stirnseitigen Abbaufläche (12) der Halde (2) ruht, und daß jeder Kratzer (13-18, 32-38) aus mehreren, jeweils zwischen zwei umlaufenden Zugelementen (23,24,40,41) angeordneten, als Kratzeisen (19,20,39) ausgebildeten, umlaufenden Kratzelementen besteht.

2. Einrichtung nach Anspruch 1, dadurch gekennzeichnet, daß die Zugelemente (23,24,40,41) aus Seilen, Gummigurten oder aus Ketten gebildet sind.

3. Einrichtung nach den Ansprüchen 1 und 2, dadurch gekennzeichnet, daß bei Verwendung von Ketten (23,24,40,41) diese als Rundstahlketten ausgebildet sind, die im Bereich des Untertrums auf der der Halde (2) zugewandten Seite in Kunststoffprofilen geführt sind.

4. Einrichtung nach den Ansprüchen 1 bis 3, dadurch gekennzeichnet, daß sich die Enden (42,43) der Kratzeisen (19,20,39) benachbarter Kratzer (13-18, 32-38) in horizontaler Richtung überdecken.

5. Einrichtung nach den Ansprüchen 1 bis 4, dadurch gekennzeichnet, daß im unteren Bereich des Rahmens (4,31) beiderseits der Enden einer durch Kupplungen (26), insbesondere Zahnkupplungen, unterteilten Antriebswelle (25) jeweils ein Antrieb (29,30) vorgesehen ist.

## Claims

1. Device for removing material from a stockpile (2), with a bridge (3) that is movable in the longitudinal direction of the stockpile (2) and also a plurality of scrapers (13-18, 32-38) which are arranged adjacent to one another in the region of a frame connected to the bridge (3), are equipped with scraper members (19, 20, 39), and are at different heights, and which are pivotable about a horizontal axis (6, 7), the scrapers (13-18, 32-38) being arranged to be driven together, characterised in that the frame (4') which contains the scrapers (13-18, 32-38) and substantially covers the extraction face (12) remains stationary on the front extraction face (12) of the stockpile (2) while the bridge (3) is travelling, and that each scraper (13-18, 32-38) consists of a plurality of rotating scraper members in the form of scraper blades (19, 20, 39), each arranged between two rotating traction elements (23, 24, 40, 41).

2. Device according to Claim 1, characterised in that the traction elements (23, 24, 40, 41) are formed of cables, rubber belts or chains.

3. Device according to Claims 1 and 2, characterised in that when using chains (23, 24, 40, 41) the latter are in the form of round steel chains which in the region of the lower portion on the side facing the stockpile (2) are guided in profiles of plastics material.

4. Device according to Claims 1 to 3, characterised in that the ends (42, 43) of the scraper blades (19, 20, 39) of adjacent scrapers (13-18, 32-38) overlap in a horizontal direction.

5. Device according to Claims 1 to 4, characterised in that in the lower region of the frame (4, 31) on each side of the ends of a drive shaft (25) divided by clutches (26), especially toothed clutches, a drive (29, 30) is provided.

## Revendications

1. Dispositif pour débalayer un terril (2), comportant un pont (3) déplaçable dans la direction longitudinale du terril (2), ainsi que plusieurs racloirs (13-18, 32-38), qui sont disposés côte-à-côte au voisinage d'un cadre raccordé au pont (3), sont équipés d'éléments de racle (19,20,39), possèdent des hauteurs différentes et peuvent pivoter autour d'un axe horizontal (6,7), les racloirs (13-18, 32-38) pouvant être entraînés conjointement, caractérisé en ce que le cadre (4'), qui comporte les racloirs (13-18, 32-38) et recouvre pour l'essentiel la surface d'abattage (12), repose de façon fixe, pendant le déplacement du pont (3), contre la surface frontale d'abattage (12) du terril (2) et que chaque racloir (13-18, 32-38) est constitué par plusieurs éléments de racle circulants qui sont montés respectivement entre deux éléments de traction (23,24,40,41) et sont agencés sous la forme de grattoirs (19,20,39).

2. Dispositif selon la revendication 1, caractérisé en ce que les éléments de traction (23,24,40,41) sont constitués par des câbles, des sangles en caoutchouc ou des chaînes.

3. Dispositif selon les revendications 1 et 2, caractérisé en ce que dans le cas de l'utilisation de chaînes (23,24,40,41), ces dernières sont formées par des chaînes en acier rond, qui sont guidées, dans la zone du brin inférieur, sur le côté tourné vers le terril (2), dans des profilés en matière plastique.

4. Dispositif selon les revendications 1 à 3, caractérisé en ce que les extrémités (42,43) des grattoirs (19,20,39) de racloirs voisins (13-18, 32-38) se recouvrent dans la direction horizontale.

5. Dispositif selon les revendications 1 à 4, caractérisé en ce que dans la zone inférieure du cadre (4,31) il est prévu un dispositif d'entraînement respectif (29,30), des deux côtés des extrémités d'un arbre d'entraînement (25) subdivisé par des accouplements (26), notamment des accouplements à dents.
